# EUROPÄISCHE PATENTSCHRIFT

(11) **EP 1 357 732 B1**
(45) Veröffentlichungstag und Bekanntmachung des Hinweises auf die Patenterteilung: **06.09.2006**
(21) Anmeldenummer: 03009221.7
(22) Anmeldetag: 23.04.2003
(51) Int. Cl.: H04M 15/00

(54) **Server für ein Telekommunikationssystem und Verfahren zum Erstellen einer Telekommunikationsverbindung**
Server for a telecommunication system and method for establishing a telecommunication connection
Serveur pour un système de télécommunication et procédé d'établissement d'une liaison de télécommunication

(30) Priorität: 23.04.2002 DE 10218148
(43) Veröffentlichungstag der Anmeldung: 29.10.2003
(73) Patentinhaber: Implementa GmbH, 30169 Hannover (DE)
(72) Erfinder: Lux, Andreas, 30419 Hannover (DE); Glaser, Ralf, 30519 Hannover (DE); Kanngieser, Thomas, 30559 Hannover (DE); von Uslar, Thilo, 30173 Hannover (DE); Kischnik, Bernd, 30165 Hannover (DE)
(74) Vertreter: Bremer, Ulrich

(56) Entgegenhaltungen:
- EP-A- 0 817 458
- EP-A- 0 973 348
- EP-A- 1 051 052
- WO-A-01/69896
- US-A1- 2001 039 186

## Beschreibung

Die Erfindung betrifft einen Server für ein Telekommunikationssystem, ein derartiges Telekommunikationssystem und ein Verfahren zum Erstellen einer Telekommunikationsverbindung.

Eine Telekommunikationsverbindung zwischen einem anrufenden Endgerät und einem angerufenen Endgerät kann über ein Festnetz oder über ein Mobilfunknetz, z. B. das GSM (Global System for Mobile Communication)-Netz erfolgen. Der Zugang zu einem Mobillfunknetz erfolgt hierbei über eine SIM (Subscriber Identity Modul) -Karte und eine Telekommunikationsschnittstelle bzw. Luftschnittstelle, die z. B. in Mobiltelefonen verwendet wird. Bei Telekommunikationssystemen sind hierbei zum Teil mehrere Endgeräte über einen Router zu einer lokalen Einheit zusammengefasst und an ein Festnetz und mehrere GSM-Netze angeschlossen. Hierbei ist es oftmals vorteilhaft, die Telekommunikationsverbindungen zwischen Endgeräten verschiedener lokaler Einheiten wahlweise über eines der mehreren GSM-Netze zu erstellen. Die geeignete Wahl kann insbesondere zur besseren Auslastung der bestehenden Festnetz- und GSM-Anschlüsse und zur Kostenminimierung in Abhängigkeit von den verschiedenen Gebührensätzen erfolgen. Entsprechende Verfahren zur Gebührenminimierung sind auch als LCR (Least Cost Routing) bekannt. Hierbei sind in den Routern der lokalen Einheiten jeweils verschiedene SIM-Karten eines GSM-Netzes vorgesehen, die wahlweise mit einer GSM-Schnittstelle verbunden werden.

Nachteilhaft hierbei ist jedoch, dass die lokalen Einheiten jeweils über einen umfangreichen Satz an SIM-Karten verfügen müssen, um eine effiziente Wahl einer geeigneten Verbindung treffen zu können. Weiterhin müssen die für die Bewertung bzw. Entscheidungsfindung relevanten Verbindungsdaten über zum Beispiel Preisgefüge und Gebührensätze der einzelnen Netzverbindungen zu jeweiligen Wochen- und Tageszeiten von dem Router jeder lokalen Einheit gespeichert und jeweils aktualisiert werden. Somit sind bestehende Systeme aufwendig, kostspielig und insbesondere für kleinere lokale Einheiten mit wenigen Endgeräten nicht wirtschaftlich sinnvoll betreibbar.

Mobilfunkgeräten sind gerätespezifische Kennungen, sogenannte IMEI (International Mobile Equipment ldentity)- Codes, zugeordnet. Die IMEI- Codes sind einzigartige fünfzehnstellige Zahlen zur Identifizierung eines individuellen Mobilfunkgerätes in einem GSM-Netzwerk. Ein IMEI-Code ist typischerweise in vier Sektionen unterteilt, im allgemeinen das TAC (Type Approval Code), FAC (Final Assembly Code), SNR (Serial Number) und Spare. Auch bei Least Cost Routern erfolgt eine direkte Zuordnung der einzelnen Schnittstellen - z. B. in Halterungen eingesetzte Mobilfunkgeräten - zu den jeweiligen Routern. Hierdurch kann z. B. ein Mobilfunkgerät unberechtigterweise geortet werden.

Zum Testen und laufenden Überprüfen verschiedener Dienste in GSM-Netzen ist aus der DE 196 20 164 C1 bekannt, einen mit einer drahtgebundenen Kommunikations-Schnittstelle ausgestatteten Mobilteilnehmer, eine Multiplexeinrichtung zur Aufnahme und wechselweisen Bedienung, eine Mehrzahl von Datenmodulen und einen Steuerrechner zu verwenden, wobei der Mobilteilnehmer anstelle des Datenmoduls bzw. der Smartkarte mit einem Adaptermodul ausgestattet ist, das mit der Multiplexeinrichtung derart verbunden ist, dass in Abhängigkeit vom Schaltzustand der Multiplexeinrichtung eines der Datenmodule in dem Mobilteilnehmer emuliert ist. Die Steuerung erfolgt über einen Steuerrechner, der zumindest virtuell mit der drahtgebundenen Kommunikations-Schnittstelle des Mobilteilnehmers und mit der Multiplexeinrichtung derartig verbunden ist, dass jeweils eines der Datenmodule selektierbar ist.

Aus der EP 0 973 348 A3 ist weiterhin eine Testeinrichtung und ein Testverfahren zur laufenden Überprüfung der Dienste in GSM-Netzen bekannt, bei der von einer zentralen Steuereinrichtung SIM-Karten aus einem SIM-Karten-Server (SKS) mit einem Testmodul für ein GSM-Netz über ein Datennetz verbunden werden. Die DE 100 11 986 A1 beschreibt eine automatisierte oder teilautomatisierte Test- oder Messausrüstung, bei der unter anderem mehreren Smartkarten jeweils Verlängerungsanpassungen zugeordnet werden, die durch eine Standard-Übertragungstechnik mit einer Verlängerungsanpassung eines Mobilgerätes verbunden werden. Hierbei kann eine Smartkarte alternativ in zwei oder mehr räumlich getrennten Mobilteilen betrieben werden oder zwei oder mehr Smartkarten in einem Mobilteil betrieben werden. Bei derartigen Testsystemen wird jeweils über eine zentrale Steuereinheit wahlweise eine SIM-Karte einem Mobilteil zugeordnet für eine entsprechende GSM-Verbindung mit einem anderen mit einer SIM-Karte verbundenen Mobilteil, um die Verfügbarkeit sämtlicher Dienste und Funktionalitäten zu testen.

Die EP 1 051 052 A1 beschreibt ein Radiotelefon mit Mehrfach-SIM-KartenLesern. Hierbei weist eine Telekommunikationseinrichtung, insbesondere ein Mobiltelefon, mehrere an eine Steuereinrichtung angeschlossene Leseeinrichtungen zum Aunehmen verschiedener Datenträger mit unterschiedlichen Rufnummern auf, um es dem Benutzer zu ermöglichen, unter Verwendung einer einzigen Telekommunikationseinrichtung unter verschiedenen Rufnummern anzurufen und ausgehende Anrufe über die Route mit den geringsten Kosten zu platzieren.

Der Erfindung liegt die Aufgabe zugrunde, gegenüber bestehenden Servern, und Verfahren zum Erstellen einer Datenverbindung Verbesserungen zu schaffen und insbesondere mit relativ geringem Aufwand eine effiziente Auswahl einer geeigneten Kommunikationsverbindung zu ermöglichen. Dies soll insbesondere mit geringem apparativen Aufwand und schnell bei hoher Datensicherheit erfolgen.

Diese Aufgabe wird gelöst durch einen Server nach Anspruch 1, ein Telekommunikationssystem mit einem derartigen Server nach Anspruch 12 und ein Verfahren zum Erstellen einer Telekommunikationsverbindung nach Anspruch 20. Die Unteransprüche beschreiben bevorzugte Weiterbildungen.

Erfindungsgemäß können insbesondere von der Smartkarten-Funktionseinrichtung auf der Smartkarte gespeicherte Algorithmen mit auf der Smartkarte gespeicherten Daten, z. B. Verschlüsselungsdaten, ausgeführt werden. Smartkarten sind hierbei insbesondere in Mobilfunkgeräte einsetzbare, insbesondere einteilige Module, z. B. teilnehmeridentifizierende Module, d.h. SIM (subscriber identity module)-Karten für Telekommunikationsnetze, die Daten und Algorithmen bzw. Funktionen für den Zugriff externer Einheiten zur Verfügung stellen.

Bei der erfindungsgemäßen Erstellung einer Telekommunikations-Verbindung, insbesondere Mobilfunkverbindung wie z. B. GSM, GPRS oder UMTS, werden aufgrund einer gewünschten Verbindung mehrerer Übertragungspunkte geeignete SIM-Karten aus einem SIM-Kartenspeicher eines zentralen Servers über ein Datennetz, zum Beispiel ein analoges oder digitales Festnetz, und über Router der lokalen Einheiten mit lokalen Telekommunikations-Schnittstellen verbunden. Übertragungspunkte können hierbei Endgeräte, z. B. Telefongeräte oder Faxgeräte, oder auch Verbindungseinrichtungen zur Herstellung einer Verbindung mit einem Endgerät sein. Die Verbindung mit dem lokalen Router kann hierbei sowohl über ein Festnetz als auch paketvermittelte Sprach- oder Datenübertragung, z. B. als Voice over IP, hergestellt werden. Eine Verbindung kann grundsätzlich auch über mehrere hintereinander geschaltete Verbindungseinrichtungen zu einem Endgerät erfolgen.

Somit kann eine Telekommunikations-Verbindung zwischen Übertragungspunkten verschiedener lokaler Einheiten über lokale Telekommunikations-Schnittstellen erstellt werden, wobei die Datenverbindung zwischen den Telekommunikations-Schnittstellen und SIM-Karten des zentralen Servers über ein Datennetz erfolgt. Der anrufende z. B. durch ein Endgerät gebildete Übertragungspunkt gibt ein Wahlsignal zu seinem Router, der dieses Wahlsignal oder ein aus diesem berechnetes weiteres Wahlsignal über die Datennetzverbindung und eine Schnittstelle des zentralen Servers an eine Steuereinrichtung des Servers gibt. Der Server erkennt aus dem Wahlsignal die lokale Einheit des anrufenden Endgerätes und die lokale Einheit des angerufenen Übertragungspunktes, z. B. Endgerätes, und ermittelt aus Verbindungsdaten eine geeignete Zuordnung von SIM-Karten zu den lokalen Einheiten. Die Berechnung der geeigneten Zuordnung der SIM-Karten zu den Telekommunikations-Schnittstellen kann insbesondere zur geeigneten Auslastung der verfügbaren Datennetz- und Telekommunikations-Netz-Verbindungen und/oder Minimierung der Gebühren für diese Verbindung erfolgen. Hierzu enthalten die Verbindungsdaten des Datenspeichers Gebührensätze jeweiliger Telekommunikations-Verbindungen zu den betreffenden Wochen- und Tageszeiten sowie gegebenenfalls Sondertarife, z.B. Pauschal-Tarife. Die Steuereinrichtung gibt ein entsprechendes Schaltsignal an eine Smartkarten-Funktionseinrichtung des Servers aus, damit dieser geeignete Fuktionen auf der Smartkarte durchführt, aus denen ein Smartkarten-Datensignal erzeugt wird. Weiterhin gibt er ein Verbindungssignal an eine Kommunikationsschnittstelle aus, damit das Smartkarten-Datensignal an den betreffenden Router geleitet wird. Die genaue Zuordnung, welche lokale Telekommunikations-Schnittstelle mit der SIM-Karte verbunden wird und die Telekommunikations-Verbindung erstellt, erfolgt vorteilhafterweise durch den jeweiligen Router.

Erfindungsgemäß wird vorteilhafterweise mindestens eine gerätespezifische Kennung, vorzugsweise ein Satz aus mehreren gerätespezifischen Kennungen, für jeweils verschiedene Telekommunikations-Schnittstellen verwendet. Hierbei können insbesondere typische Benutzerprofile nachgebildet werden, z. B. eine tageszeitabhängige Benutzung zwischen zwei Standorten oder ein räumliches "Wandern" über mehrere räumlich benachbarte bzw. aufeinanderfolgende Bereiche, indem in aufeinander folgenden Zeiträumen Telekommunikations-Schnittstellen benachbarter räumlicher Bereiche die gleiche gerätespezifische Kennung zugeordnet wird. Hierdurch wird eine flexible und effiziente Auswahl einer geeigneten Kommunikationsverbindung bei einer hohen Sicherheit gegenüber einer unberechtigten Ortung eines Teilnehmers erreicht.

Die Zuordnung der gerätespezifischen Kennungen kann insbesondere durch einen zentralen Server über ein Datennetz erfolgen, zum Beispiel ein analoges oder digitales Festnetz und über Router lokaler Einheiten. Das Festnetz kann zusätzlich auch zur Zuordnung einer SIM-Karte zu der Telekommunikations-Schnittstelle genutzt werden. Der Server kann somit bei dieser Ausführungsform aus dem Wahlsignal die lokale Einheit des anrufenden Endgerätes und die lokale Einheit des angerufenen Endgerätes erkennen, und ermittelt aus Verbindungsdaten eine geeignete Zuordnung von gerätespezifischen Kennungen und von SIM-Karten zu den lokalen Einheiten.

Die genaue Zuordnung, welche lokale Telekommunikations-Schnittstelle die Telekommunikations-Verbindung erstellt und entsprechend die jeweilige gerätespezifische Kennung erhält und mit der SIM-Karte verbunden wird, erfolgt vorteilhafterweise durch den jeweiligen Router.

Erfindungsgemäß kann der Server auf interne oder externe Datenspeicher mit gerätespezifischen Kennungen und/oder SIM-Karten zugreifen. Die Smartkarten-Funktionseinrichtung des Servers ermöglicht grundsätzlich Parallelverbindungen von den SIMkarten und gerätespezifischen Kennungen, z. B. über die Kommunikationsschnittstelle mit mehreren Endschnittstellen, so dass keine Beschränkung auf ein Multiplexverfahren erfolgt.

Das erfindungsgemäße System kann insbesondere auch mit mehreren Servern, insbesondere parallelen Servern, z. B. über ein Datennetz wie das Internet vernetzt, betrieben werden. Hierbei können z. B. n Server und m Emulationsschnittstellen miteinander vernetzt sein, wobei n, m natürliche Zahlen sind.

Die Steuereinrichtung kann die Telekommunikations-Verbindung, z. B. GSM-, GPRS- oder UMTS-Verbindung, z. B. nach einem Optimierungsverfahren ermitteln.

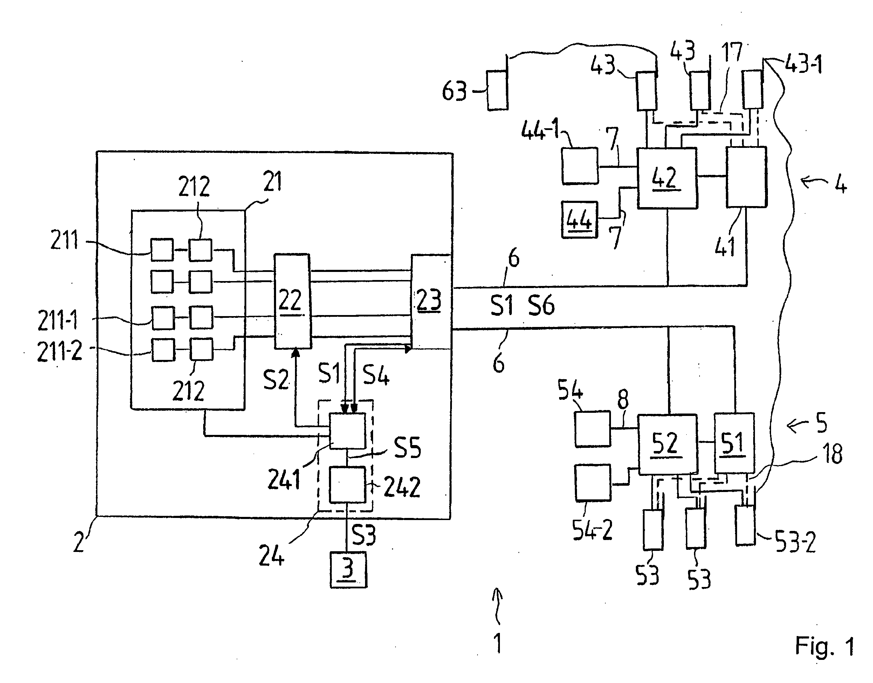

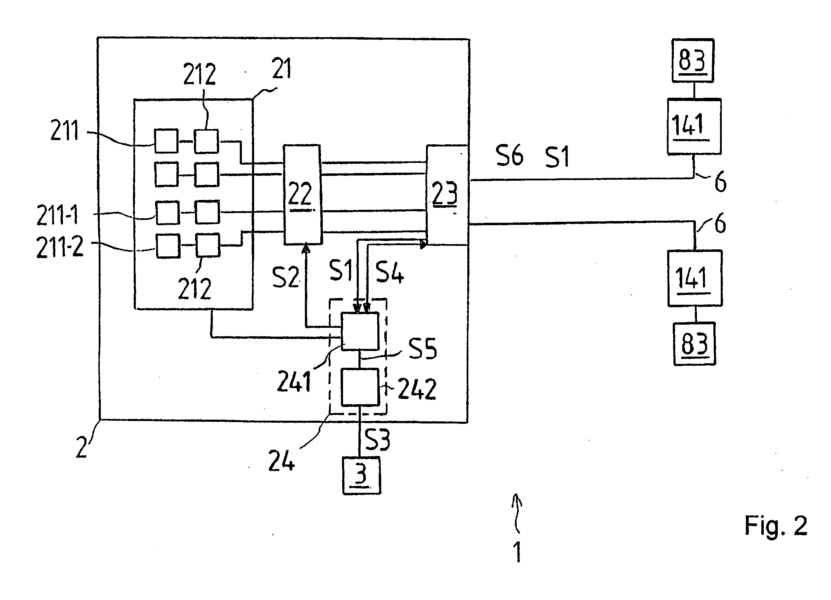

Die Erfindung wird im Folgenden anhand der beiliegenden Zeichnungen an einigen Ausführungsformen näher erläutert. Fig. 1 zeigt ein Blockdiagramm eines erfindungsgemäßen Telekommunikationssystems gemäß einer Ausführungsform.

Ein Telekommunikationssystem 1 weist einen zentralen Server 2, einen innerhalb oder außerhalb des Servers 2 angeordneten Datenspeicher 3 mit gespeicherten Verbindungsdaten und mehrere mit dem Server 2 über ein Datennetz 6, zum Beispiel ein Festnetz, insbesondere ein analoges oder digitales Festnetz, verbundene lokale Einheiten auf, von denen eine erste lokale Einheit 4 und eine zweite lokale Einheit 5 gezeigt sind. Die lokalen Einheiten können insbesondere geografisch weiter voneinander entfernt sein.

In dem Server 2 sind in einem SIM-Kartenspeicher 21 mehrere, zum Beispiel bis zu 300 SIM-Karten 211 aufgenommen, die jeweils über einen SIM-Kartenadapter 212 mit einer Smartkarten-Funktionseinrichtung 22 des Servers 2 verbunden sind. Die Smartkarten-Funktionseinrichtung 22 führt in Abhängigkeit von einem Steuersignal S2 Funktionen bzw. Befehle auf den einzelnen SIM-karten 211 durch, deren Ergebnisse als Smartkarten-Datensignale S6 von einer Kommunikations-Schnittstelle 23 über das Datennetz 6 an die jeweilige lokale Einheit 4, 5 gesendet werden. Eine Steuereinrichtung 24 des Servers 2 weist eine Verbindungs-Steuereinrichtung 241 und eine Bewertungseinrichtung 242 auf, die ein Verbindungsdatensignal s3 aus dem Datenspeicher 3 ausliest.

Die lokalen Einheiten 4, 5 weisen jeweils eine Emulationseinrichtung 41, 51 auf, die eine Verbindung der Kommunikationsschnittstelle 23 über das Datennetz 6 und ein lokales Datennetz 17, 18 - insbesondere ein sternförmiges Leitungssystem - mit der GSM-Schnittstelle 43 herstellt. Die Emulationseinrichtungen 41, 51 emulieren lokal jeweils eine SIM-Karte 211, was vorzugsweise im wesentlichen softwaremäßig erfolgt. Der Router 42, 52 ist jeweils mit mehreren GSM-Schnittstellen 43, 53 - oder auch GPRS- oder UMTS-Schnittstellen, d.h. im wesentlichen Luft-Schnittstellen, wie sie in Mobiltelefonen vorgesehen sind - verbunden.

Mit dem jeweiligen Router 42, 52 sind über ein Netz 7 bzw. 8 mehrere Übergabepunkte 44, 54 verbunden. Die Übergabepunkte 44, 54 können Endgeräte, zum Beispiel analoge oder digitale Telefongeräte, und/oder Verbindungseinrichtungen zur Herstellung einer Verbindung mit Endgeräten oder auch weiteren Verbindungseinrichtungen sein, die wiederum eine Verbindung mit mindestens einem Endgerät herstellen. Das Netz 7 zwischen dem Router 42 und den Endgeräten 44 kann grundsätzlich ein beliebiges Netz 7 sein. Es kann insbesondere ein lokales Telefonnetz bzw. ein LAN (lokal area network), aber grundsätzlich auch ein WAN (wide area network) bzw. ein Festnetz sein. Weiterhin kann über das Netz 7 auch eine paketvermittelte Daten- oder Sprachübertragung, z. B. Voice over IP, erfolgen. Falls ein Benutzer von einem Endgerät 44-1 über die erste lokale Einheit 4 ein Endgerät 54-2 der zweiten lokalen Einheit 5 anrufen will, gibt er in gewohnter Weise ein Wahlsignal S1 mit der Telefonnummer des anzurufenden Endgerätes 54-2 an den Router 42 aus. Der Router 42 erkennt, dass ein Anruf zu einer anderen lokalen Einheit erfolgen soll und gibt das Wahlsignal S1 - bzw. ein hieraus gebildetes weiteres Wahlsignal - über das Datennetz 6 sowie die Schnittstelle 23 zu der Bewertungseinrichtung 242 der Steuereinrichtung 24. Die Bewertungseinrichtung 242 ruft ein Verbindungsdatensignal S3 aus dem Datenspeicher 3 ab, das zum Beispiel Daten über Gebührensätze bei verschiedenen GSM-Verbindungen zu der betreffenden Tages- und Wochenzeit sowie gegebenenfalls Daten über noch nicht vollständig ausgeschöpfte Pauschalbeträge enthält. Je nach dem gespeicherten Bewertungsalgorithmus errechnet die Bewertungseinrichtung 242 hieraus direkt eine GSM-Verbindung oder überprüft zunächst, ob eine GSM-Verbindung bzw. Luft-Verbindung oder eine Festnetzverbindung z. B. über das Festnetz 6 vorteilhaft ist. Daraufhin gibt sie ein Steuersignal S4 an die Verbindungs-Steuereinrichtung 242 aus, die wiederum Schaltsignale S2 an die Smartkarten-Funktionseinrichtung 22 und gegebenenfalls an die SIM-Kartenadapter 212 sowie ein Verbindungssteuersignal S4 an die Kommunikationsschnittstelle 23 ausgibt. Hierdurch wird von der Smartkarten-Funktionseinrichtung 22 auf einer geeigneten SIM-karte 211-1 mindestens eine Funktion ausgeführt, anschließend Datensignale S6 ausgegeben und über die Kommunikationsschnittstelle 23 an die Emulationseinrichtung 41 ausgegeben, die diese Daten bei ihrer Emulation für die GSM-Schnittstelle 43-1 verwendet; weiterhin werden von der Smartkarten-Funktionseinrichtung 22 Funktionen auf einer weiteren SIM-karte 211-2 - gegebenenfalls auch der gleichen SIM-Karte 211-1 - durchgeführt und entsprechend Signale S6 über die entsprechende Emulationseinrichtung 51 an eine GSM-Schnittstelle 53-2 ausgegeben. Die Auswahl der jeweils geeigneten GSM-Schnittstelle 43-1 bzw. 53-2 kann von der Steuereinrichtung 24 erfolgen; vorteilhafterweise erfolgt sie jedoch dezentral von dem Router 42, 52 der jeweiligen lokalen Einheit. Zwischen dem Router 42 bzw. 52 und der entsprechenden Emulationseinrichtung 41 bzw. 51 werden z. B. geeignete Steuersignale ausgegeben. Anschließend wird eine Telekommunikationsverbindung des Endgerätes 44 über den Router 42, die GSM-Schnittstelle 43-1, die GSM-Verbindung bzw. Luft-Verbindung zwischen zu der GSM-Schnittstelle 53-2, den Router 52 zu dem betreffenden Endgerät 54-2 hergestellt.

Die Ausgabe der Signale an die jeweilige Emulationseinrichtung kann grundsätzlich insbesondere lediglich zeitweise, zum Beispiel zur Erstellung des Telefongesprächs erfolgen. Das Festnetz 6 kann zum Beispiel ein Local Area Network (LAN) oder Wide Area Network (WAN), zum Beispiel über Ethernet-Datenverbindungen oder ISDN-Leitungen sein.

Weiterhin können auch von einer Schnittstelle 43 des anrufenden Routers 42 Verbindungen zu weiteren Schnittstellen 63 hergestellt werden.

Bei einer weiteren, gegenüber Fig. 1 abgewandelten Ausführungsform werden zusätzlich IMEI-Codes zugeordnet. In einem Kennungsspeicher sind mehrere als gerätespezifische Kennungen dienende IMEI-Codes gespeichert, die von der Verbindungs-Steuereinrichtung 241 ausgelesen werden. Die Zuordnung der IMEI-Codes zu den GSM-Schnittstellen 43 erfolgt über die Router 42, 52.

Die Bewertungseinrichtung 242 errechnet je nach dem gespeicherten Bewertungsalgorithmus - wie oben beschrieben - eine GSM-Verbindung oder überprüft zunächst, ob eine GSM-Verbindung bzw. Luft-Verbindung oder eine Festnetzverbindung z. B. über das Festnetz 6 vorteilhaft ist. Daraufhin gibt sie - zusätzlich zu der obigen Funktion der ersten Ausführungsform - ein Steuersignal S4 an die Verbindungs-Steuereinrichtung 241 aus, die wiederum gemäß vorgegebener Kriterien zwei geeignete IMEI-Codes IM1 und lM2 auswählt und über eine Kommunikationsschnittstelle 23 an die Router 42 und 52 ausgibt.

Auch bei dieser Ausführungsform werden zwischen dem Router 42 bzw. 52 und der entsprechenden Emulationseinrichtung 41 bzw. 51 werden z. B. geeignete Steuersignale ausgegeben. Anschließend wird eine Telekommunikationsverbindung des Endgerätes 44-1 über den Router 42, die GSM-Schnittstelle 43-1 mit zugeordneter IMEI IM1, die GSM-Schnittstelle 53-2 mit zugeordneter IMEI lM2, den Router 52 zu dem betreffenden Endgerät 54-2 hergestellt. Von einer Schnittstelle 43 des anrufenden Routers 42 können Verbindungen zu weiteren Schnittstellen 63 hergestellt werden, die eine feste lMEl aufweisen.

## Patentansprüche

1. Server für ein Telekommunikationssystem, der mindestens aufweist:
einen Smartkartenspeicher (21) zur Aufnahme mehrerer Smartkarten (211), eine Kommunikationsschnittstelle (23) für ein Datennetz (6),
eine Smartkarten-Funktionseinrichtung (22) zum Ausführen von Befehlen auf Smartkarten (211) in Abhängigkeit von einem Schaltsignal (S2), und
eine Steuereinrichtung (24), die über die Kommunikationsschnittstelle (23) ein Wahlsignal (S1) von einem anrufenden oder angerufenen Router (42) einer lokalen Einheit (4) und von einem Datenspeicher (3) ein Verbindungsdatensignal (S3) aufnimmt, an die Smartkarten-Funktionseinrichtung (22) das Schaltsignal (S2) zum Ausführen mindestens einer Funktion auf mindestens einer Smartkarte (211) ausgibt und an die Kommunikationsschnittstelle (23) ein Verbindungssignal (S4) zur Ausgabe eines Smartkarten-Datensignals (S6) zur Emulation einer Smartkarte an die lokale Einheit (4) ausgibt,
wobei die Steuereinrichtung (24) eine Telekommunikations-Verbindung zwischen Telekommunikations-Schnittstellen (43-1, 53-2, 63) des anrufenden Routers (42) und/oder eines angerufenen Routers (52) und/oder einer externen Schnittstelle (63) ermittelt und durch das Schaltsignal (S2) und das Verbindungssignal (S4) eine Telekommunikationsverbindung zwischen zwei Telekommunikations-Schnittstellen (43-1, 53-2, 63) erstellt.

2. Server nach Anspruch 1, **dadurch gekennzeichnet, dass** die Steuereinrichtung (24) die Telekommunikations-Verbindung, z. B. GSM-, GPRS- oder UMTS-Verbindung, nach einem gespeicherten Bewertungsalgorithmus ermittelt.

3. Server nach Anspruch 1 oder 2, **dadurch gekennzeichnet, dass** die Steuereinrichtung (24) weiterhin eine zweite SIM-Karte (211-2) mit einem weiteren, insbesondere angerufenen Router (52), verbindet.

4. Server nach einem der vorherigen Ansprüche, **dadurch gekennzeichnet, dass** der Smartkartenspeicher (21) den einzelnen Smartkarten (211) zugeordnete Smartkarten-Adapter (212) zum Anschluss an die Smartkarten-Funktionseinrichtung (22) aufweist.

5. Server nach einem der vorherigen Ansprüche, **dadurch gekennzeichnet, dass** der Datenspeicher (3) in dem Server (2) angeordnet ist.

6. Server nach einem der vorherigen Ansprüche, **dadurch gekennzeichnet, dass** das Datennetz ein Festnetz (6) ist.

7. Server nach einem der vorherigen Ansprüche, **dadurch gekennzeichnet, dass** die Steuereinrichtung (24) durch das Schaltsignal (S2) und das Verbindungssignal (S4) eine erste SIM-Karte (211-1) mit einer Emulationseinrichtung (41) verbindet und die Emulationseinrichtung (41) mit den aufgenommenen Smartkarten-Datensignalen (S6) die Smartkarte (211-1) lokal emuliert.

8. Server nach einem der vorherigen Ansprüche, **dadurch gekennzeichnet, dass** die Steuereinrichtung (24) aufweist:
eine Bewertungseinrichtung (242), die das Wahlsignal (S1) und das Verbindungsdatensignal (S3) aufnimmt, die Telekommunikations-Verbindung ermittelt und ein Steuersignal (S5) ausgibt, und
eine Verbindungs-Steuereinrichtung (241), die das Steuersignal (S5) aufnimmt und das Schaltsignal (S2), das Verbindungssignal (S4) an die Kommunikationsschnittstelle (23) und vorzugsweise auch ein Steuersignal an den Smartkartenspeicher (21) ausgibt.

9. Server nach einem der vorherigen Ansprüche, **dadurch gekennzeichnet, dass** er einen Kennungsspeicher (25) mit mehreren gerätespezifischen Kennungen (IM 1,2) aufweist, und
die Steuereinrichtung (24) von dem Kennungsspeicher (25) eine gerätespezifische Kennung aufnimmt und an die Kommunikationsschnittstelle (23) das Verbindungssignal (S4) zur Ausgabe eines Smartkarten-Datensignals (S6) und einer gerätespezifischen Kennung (IM 1,2) an die lokale Einheit (4) ausgibt.

10. Server nach Anspruch 8 und Anspruch 9, **dadurch gekennzeichnet, dass** die Bewertungseinrichtung die Zuordnung der gerätespezifischen Kennungen (IM 1,2) zu den lokalen Einheiten (4,5) festlegt.

11. Server nach einem der vorherigen Ansprüche, **dadurch gekennzeichnet, dass** das Verbindungsdatensignal (S3) Bewertungsangaben, z. B. Gebührenangaben, zu verschiedenen Telekommunikations-Verbindung enthält und die Bewertungseinrichtung (242) in Abhängigkeit von dem Wählsignal (S1) eine Telekommunikations-Verbindung zwischen zwei GSM-Schnittstellen (43, 53, 63) mit einem optimierten Wert ermittelt.

12. Telekommunikationssystem, insbesondere zum Erstellen einer GSM-Verbindung, das mindestens aufweist:
einen Server (2) nach einem der vorherigen Ansprüche,
einen Datenspeicher (3) zur Ausgabe des Datensignals (S3) an die Steuereinrichtung (24), und
mindestens eine lokale Einheit (4), die einen über das Datennetz (6) mit der Kommunikationsschnittstelle (23) verbunden Router (42), eine Emulationseinrichtung (41) zur Emulation einer Smartkarte (211) und mindestens eine Endschnittstelle (43) aufweist,
wobei die Steuereinrichtung (24) des Servers (2) ein Anfragesignal (S1) von dem Router (42) und ein Datensignal (S3) von dem Datenspeicher (3) aufnimmt, und ein Schaltsignal (S2) an die Smartkarten-Funktionseinrichtung (22) und ein Steuersignal an die Kommunikationsschnittstelle (23) derartig ausgibt, dass eine Smartkarte (211-1) des Smartkartenspeichers (21) mit der Emulationseinrichtung (41) zur Emulation der Smarkarte für die Endschnittstelle (43-1) verbunden wird.

13. Telekommunikationssystem nach Anspruch 12, **dadurch gekennzeichnet, dass** einem zentralen Server (2) mehrere lokale Einheiten (4, 5) zugeordnet sind.

14. Telekommunikationssystem nach Anspruch 12 oder 13, **dadurch gekennzeichnet, dass** die ein oder mehreren lokalen Einheiten (4, 5) jeweils mehrere Endschnittstellen (43, 53) aufweisen.

15. Telekommunikationssystem nach einem der Ansprüche 12 bis 14, **dadurch gekennzeichnet, dass** jede lokale Einheit (4, 5) eine Emulationseinrichtung (41, 51) zur Aufnahme der Smartkartensignale (S6) und Emulation der Smartkarte (211) für die Endschnittstellen (43, 53) aufweist.

16. Telekommunikationssystem nach einem der Ansprüche 12 bis 15, **dadurch gekennzeichnet, dass** mindestens zwei über ein Datennetz (6) mit der Schnittstelle (23) verbundene lokale Einheiten (4, 5) vorgesehen sind, die jeweils einen Router (42, 52), der über das Datennetz (6) mit der Kommunikationsschnittstelle (23) verbunden ist, mindestens eine Emulationseinrichtung (41, 51) zur Aufnahme von Smartkarten-Datensignalen (S6) und Emulation einer Smartkarte (211), mindestens einen Übergabepunkt, z. B. ein Endgerät (44, 54) für einen Benutzer oder eine Verbindungseinrichtung, und mindestens eine Telekommunikations-Schnittstelle (43, 53) zur Verbindung mit einer Telekommunikations -Schnittstelle (53, 43) der anderen lokalen Einheit (5, 4) oder einer externen Einheit (63) aufweisen, wobei
von einem anrufenden Übergabepunkt (44-1) über die erste lokale Einheit (4) zur Erstellung einer Telekommunikationsverbindung mit einem angerufenen Übergabepunkt (54-2) über die zweite lokale Einheit (5) ein Wahlsignal (S1) über den Router, das Datennetz (6) und die Kommunikationschnittstelle an die Steuereinrichtung (24) ausgebbar ist, und
von der Steuereinrichtung (24) in Abhängigkeit von dem Wahlsignal (S1) und einem Verbindungsdatensignal (S3) des Datenspeichers (3) eine Telekommunikations-Verbindung zwischen einer anrufenden Telekommunikations-Schnittstelle (43-1) und einer internen oder externen angerufenen Telekommunikations-Schnittstelle (53-2, 63) ermittelbar ist und Schaltsignale (S2) an die Smartkarten-Funktionseinrichtung (22) und Verbindungssteuersignale (S4) an die Kommunikationsschnittstelle (23) derartig ausgebbar sind, dass jeweils eine Emulation einer Smartkarte (211) für die jeweiligen Telekommunikations -Schnittstelle (43-1, 53-2) erstellt wird.

17. Telekommunikationssystem nach Anspruch 16, **dadurch gekennzeichnet, dass** die lokalen Einheiten (4, 5) jeweils mehrere Übergabepunkte (44, 54), z. B. Endgeräte (44, 54) und/oder Verbindungseinrichtungen, aufweisen.

18. Telekommunikationssystem nach Anspruch 16 oder 17, **dadurch gekennzeichnet, dass** das Verbindungsdatensignal (S3) Bewertungsangaben, z. B. Gebührenangaben, zu verschiedenen Telekommunikations -Verbindungen enthält und die Bewertungseinrichtung (242) in Abhängigkeit von dem Wählsignal (S1) eine Telekommunikations-Verbindung zwischen zwei Telekommunikations -Schnittstellen (43, 53, 63) mit einem optimalen Bewertungswert, insbesondere Gebührenwert, ermittelt.

19. Telekommunikationssystem nach einem der Ansprüche 12 bis 18, **dadurch gekennzeichnet, dass** es mehrere Server (2), vorzugsweise mehrere gleichberechtigte Server (2) aufweist, die jeweils einen Smarkartenspeicher (21) aufweisen.

20. Verfahren zum Erstellen einer Telekommunikationsverbindung, insbesondere Mobilfunkverbindung, bei dem von einem anrufenden Übergabepunkt (44) einer ersten lokalen Einheit (4) ein Wahlsignal (S1) an einen ersten Router (42) der ersten lokalen Einheit (4), und von dem ersten Router (42) über ein Datennetz (6) zu einem Server (2) ausgegeben wird,
der Server (2) aus dem Wahlsignal (S1) und einem Verbindungsdatensignal (S3) eines Datenspeichers (3) eine Telekommunikationsverbindung zwischen einer ersten Telekommunikations-Schnittstelle der ersten lokalen Einheit (4) und einer zweiten Telekommunikations -Schnittstelle einer zweiten lokalen Einheit (5) eines angerufenen Übergabepunktes (54) ermittelt,
der Server eine Verbindung zwischen einer SIM-Karte (211) seines SIM-Kartenspeichers (21) und der ersten Telekommunikations -Schnittstelle (43) sowie eine Verbindung zwischen einer SIM-Karte (211) und der zweiten Telekommunikations -Schnittstelle (53) erstellt,
über die Verbindungen Smartkartendatensignale zur ersten lokalen Einheit und zur zweiten lokalen Einheit übertragen werden,
die Smartkartendaten von den lokalen Einheiten zur Emulation von den SIM-Karten verwendet werden, und
eine Telekommunikationsverbindung zwischen dem anrufenden Übergabepunkt (44) und dem angerufenen zweiten Übergabepunkt (54) über den ersten Router (42), die erste Telekommunikations-Schnittstelle (43), die zweite Telekommunikations -Schnittstelle (53) und den zweiten Router (52) erstellt wird.

21. Verfahren nach Anspruch 20, **dadurch gekennzeichnet, dass** eine Steuereinrichtung (24) des Servers (2) das Wahlsignal (S1) und das Verbindungsdatensignal (S3) aufnimmt, eine Telekommunikationsverbindung vorzugsweise nach einer Optimierungsroutine ermittelt und ein Schaltsignal (S2) an eine Smartkarten-Funktionseinrichtung (22) und ein Verbindungssignal (S5) an eine Kommunikationsschnittstelle (23) des Servers (2) derartig ausgibt, dass eine Verbindung einer Smartkarte (211) mit der Telekommunikations-Schnittstelle (43) der ersten lokalen Einheit und eine Verbindung einer Smartkarte (211) mit einer Telekommunikations-Schnittstelle (43) der zweiten lokalen Einheit (5) erstellt wird.

22. Verfahren nach Anspruch 20 oder 21, **dadurch gekennzeichnet, dass** die Verbindungen der SIM-Karten (211) mit den beiden Telekommunikations-Schnittstellen (43, 53, 63) vorzugsweise auch weitere Verbindungen zwischen SIM-Karten (211) und weiteren Telekommunikations-Schnittstellen (43, 53), parallel erstellbar sind.

23. Verfahren nach einem der Ansprüche 20 bis 22, **dadurch gekennzeichnet, dass** das Verbindungsdatensignal (S3) ein Gebührensignal über verschiedene Telekommunikations-Verbindungen enthält, und von der Steuereinrichtung (24) eine Telekommunikationsverbindung mit einem optimalen Bewertungswert, z. B. Gebührenwert, ermittelt wird und aufgrund dieser Ermittlung die SIM-Karten mit den Telekommunikations -Schnittstellen verbunden werden.

24. Verfahren nach einem der Ansprüche 22 bis 23, **dadurch gekennzeichnet, dass** eine gerätespezifische Kennung (IM 1,2) zu verschiedenen Zeitpunkten Telekommunikations-Schnittstellen (43, 53) verschiedlicher lokaler Einheiten (4, 5) zugeordnet wird.

25. Verfahren nach Anspruch 24, **dadurch gekennzeichnet, dass** die gerätespezifische Kennung (IM 1,2) den Telekommunikations-Schnittstellen in Abhängigkeit von der Tageszeit zugeordnet wird.

26. Verfahren nach Anspruch 24 oder 25, **dadurch gekennzeichnet, dass** die gerätespezifische Kennung (IM 1,2) in aufeinanderfolgenden Zeiträumen den Telekommunikations-Schnittstellen räumlich benachbarter lokaler Einheiten zugeordnet wird.

27. Verfahren nach einem der Ansprüche 24 bis 26, **dadurch gekennzeichnet, dass** mehrere gerätespezifischen Kennungen (IM 1,2) parallel oder zeitlich getrennt jeweils zu verschiedenen Zeitpunkten Telekommunikations-Schnittstellen (43, 53) verschiedlicher lokaler Einheiten (4, 5) zugeordnet werden.

28. Verfahren nach einem der Ansprüche 24 bis 27, **dadurch gekennzeichnet, dass** mehreren lokalen Einheiten (4, 5) ein Server (2) zugeordnet ist, der den lokalen Einheiten (4, 5) die gerätespezifischen Kennungen (IM 1,2) zuweist.

29. Verfahren nach Anspruch 28, **dadurch gekennzeichnet, dass** die lokalen Einheiten (4,5) jeweils einen Router (42, 52) aufweisen, der die vom Server (2) zugewiesene gerätespezifische Kennung (IM 1,2) einer Telekommunikations-Schnittstelle (43) der lokalen Einheit (4, 5) zuweist.

30. Verfahren nach Anspruch 28 oder 29, **dadurch gekennzeichnet, dass** der Server (2) aus einem Kennungsspeicher (25), vorzugsweise einem internen Kennungsspeicher (25) des Servers (2), die gerätespezifischen Kennungen (IM 1,2) entnimmt und jede gerätespezifische Kennung (IM 1,2) jeweils keiner oder genau einer lokalen Einheit (4, 5) zuweist.

31. Verfahren nach einem der Ansprüche 20 bis 30, **dadurch gekennzeichnet, dass** der der anrufende Übergabepunkt (44) und/oder der angerufene Übergabepunkt (54) ein Endgerät (44, 54) und/oder eine Verbindungseinrichtung zur Erstellung einer Verbindung mit mindestens einem Endgerät oder einer weiteren Verbindungseinrichtung ist.

## Claims

1. Server for a telecommunications system having at least:
a smart card memory (21) for accommodating several smart cards (211), a communication interface (23) for a data network (6),
a smart card functional device (22) for executing commands on smart cards (211) as a function of a switching signal (S2) and
a control device (24) which via the communication interface (23) receives a dial signal (S1) from a calling or called router (42) of a local unit (4) and
a connection data signal (S3) from a data memory (3), outputs to the smart card functional device (22) the switching signal (S2) for executing at least one function on at least one smart card (211) and outputs to the communication interface (23) a connection signal (S4) for outputting a smart card data
signal (S6) for emulating a smart card to the local unit (4),
wherein the control device (24) detects a telecommunication connection between telecommunication interfaces (43-1, 53-2, 63) of the calling router (42) and/or a called router (52) and/or an external interface (63) and creates a telecommunication connection between two telecommunication interfaces (43-1, 53-2, 63) by means of the switching signal (S2) and the connection signal (S4).

2. Server according to claim 1, **characterised in that** the control device (24) detects the telecommunication connection, e.g. GSM, GPRS or UMTS connection, according to a stored evaluation algorithm.

3. Server according to claim 1 or 2, **characterised in that** the control device (24) further connects a second SIM card (211-2) to a further, in particular called, router (52).

4. Server according to one of the previous claims, **characterised in that** the smart card memory (21) has smart card adaptors (212) allocated to the individual smart cards (211) for connecting to the smart card functional device (22).

5. Server according to one of the previous claims, **characterised in that** the data memory (3) is arranged in the server (2).

6. Server according to one of the previous claims, **characterised in that** the data network is a fixed network (6).

7. Server according to one of the previous claims, **characterised in that** the control device (24) connects a first SIM card (211-1) to an emulation device (41) by means of the switching signal (S2) and the connection signal (S4) and the emulation device (41) emulates the smart card (211-1) locally with the received smart card data signals (S6).

8. Server according to one of the previous claims, **characterised in that** the control device (24) has:
an evaluation device (242) which receives the dial signal (S1) and the connection data signal (S3), detects the telecommunication connection and outputs a control signal (S5) and
a connection control device (241) which receives the control signal (S5) and outputs the switching
signal (S2), the connection signal (S4) to the communication interface (23) and preferably also a control signal to the smart card memory (21).

9. Server according to one of the previous claims, **characterised in that** it has an identifier memory (25) with several device-specific identifiers (IM 1, 2) and the control device (24) receives a device-specific identifier from the identifier memory (25) and outputs to the communication interface (23) the connection signal (S4) for outputting a smart card data signal (S6) and a device-specific identifier (IM 1, 2) to the local unit (4).

10. Server according to claim 8 and claim 9, **characterised in that** the evaluation device establishes the allocation of the device-specific identifiers (IM 1, 2) to the local units (4, 5).

11. Server according to one of the previous claims, **characterised in that** the connection data signal (S3) contains evaluation details, e.g. fee details, on various telecommunications connections and the evaluation device (242) detects a telecommunication connection between two GSM interfaces (43, 53, 63) with an optimised value as a function of the dial signal (S1).

12. Telecommunications system, in particular for creating a GSM connection, which has at least:
a server (2) according to one of the previous claims, a data memory (3) for outputting the data signal (S3) to the control device (24) and
at least one local unit (4) which has a router (42) connected to the communication interface (23) via the data network (6), an emulation device (41) for emulating a smart card (211) and at least one terminal interface (43),
wherein the control device (24) of the server (2) receives a request signal (S1) from the router (42) and a data signal (S3) from the data memory (3) and outputs a switching signal (S2) to the smart card functional device (22) and a control signal to the communication interface (23) in such a way that a smart card (211-1) of the smart card memory (21) is connected to the emulation device (41) for emulation of the smart card for the terminal interface (43-1).

13. Telecommunications system according to claim 12, **characterised in that** several local units (4, 5) are allocated to a central server (2).

14. Telecommunications system according to claim 12 or 13, **characterised in that** the one or more local units (4, 5) have in each case several terminal interfaces (43, 53).

15. Telecommunications system according to one of claims 12 to 14, **characterised in that** each local unit (4, 5) has an emulation device (41, 51) for receiving the smart card signals (S6) and emulating the smart card (211) for the terminal interfaces (43, 53).

16. Telecommunications system according to one of claims 12 to 15, **characterised in that** at least two local units (4, 5) connected to the interface (23) via a data network (6) are provided, which in each case have a router (42, 52), connected to the communication interface (23) via the data network (6), at least one emulation device (41, 51) for receiving smart card data signals (S6) and emulating a smart card (211), at least one interconnection point, e.g. a terminal device (44, 54) for a user or a connection device, and at least one telecommunication interface (43, 53) for connecting to a telecommunication interface (53, 43) of the other local unit (5, 4) or an external unit (63), wherein
a dial signal (S1) can be output to the control device (24) via the router, the data network (6) and the communication interface from a calling interconnection point (44-1) via the first local unit (4) to create a telecommunication connection to a called interconnection point (54-2) via the second local unit (5) and
a telecommunication connection between a calling telecommunication interface (43-1) and an internal or external called telecommunication interface (53-2, 63) can be detected by the control device (24) as a function of the dial signal (S1) and a connection data signal (S3) of the data memory (3) and switching signals (S2) can be output to the smart card functional device (22) and connection control signals (S4) to the communication interface (23) in such a way that in each case an emulation of a smart card (211) for the respective telecommunication interface (43-1, 53-2) is created.

17. Telecommunications system according to claim 16, **characterised in that** the local units (4, 5) in each case have several interconnection points (44, 54), e.g. terminal devices (44, 54) and/or connection devices.

18. Telecommunications system according to claim 16 or 17, **characterised in that** the connection data signal (S3) contains evaluation details, e.g. fee details, on various telecommunication connections and the evaluation device (242) detects a telecommunication connection between two telecommunication interfaces (43, 53, 63) with an optimum evaluation value, in particular fee value, as a function of the dial signal (S1).

19. Telecommunications system according to one of claims 12 to 18, **characterised in that** it has several servers (2), preferably several servers (2) of equal priority, which each have a smart card memory (21).

20. Method for creating a telecommunication connection, in particular mobile radio connection, in which a dial signal (S1) is output to a first router (42) of the first local unit (4) from a calling interconnection point (44) of a first local unit (4) and from the first router (42) via a data network (6) to a server (2),
the server (2) detects from the dial signal (S1) and a connection data signal (S3) of a data memory (3) a telecommunication connection between a first telecommunication interface of the first local unit (4) and a second telecommunication interface of a second local unit (5) of a called interconnection point (54),
the server creates a connection between a SIM card (211) of its SIM card memory (21) and the first telecommunication interface (43) and also a connection between a SIM card (211) and the second telecommunication interface (53), smart card data signals are transmitted to the first local unit and to the second local unit via the connections,
the smart card data are used by the local units for emulation of the SIM cards and a telecommunication connection is created between the calling interconnection point (44) and the called second interconnection point (54) via the first router (42), the first telecommunication interface (43), the second telecommunication interface (53) and the second router (52).

21. Method according to claim 20, **characterised in that** a control device (24) of the server (2) receives the dial signal (S1) and the connection data signal (S3), creates a telecommunication connection preferably according to an optimisation routine and outputs a switching signal (S2) to a smart card functional device (22) and a connection signal (S5) to a communication interface (23) of the server (2) in such a way that a connection of a smart card (211) to the telecommunication interface (43) of the first local unit and a connection of a smart card (211) to a telecommunication interface (43) of the second local unit (5) are created.

22. Method according to claim 20 or 21, **characterised in that** parallel to the connections of the SIM cards (211) to the two telecommunication interfaces (43, 53, 63) other connections between SIM cards (211) and further telecommunication interfaces (43, 53) can preferably also be created.

23. Method according to one of claims 20 to 22, **characterised in that** the connection data signal (S3) contains a fee signal about various telecommunication connections and a telecommunication connection with an optimum evaluation value, e.g. fee value, is detected by the control device (24) and, based on this detection, the SIM cards are connected to the telecommunication interfaces.

24. Method according to one of claims 22 to 23, **characterised in that** a device-specific identifier (IM 1, 2) is allocated at various times to telecommunication interfaces (43, 53) of different local units (4, 5).

25. Method according to claim 24, **characterised in that** the device-specific identifier (IM 1, 2) is allocated to the telecommunication interfaces as a function of the time of day.

26. Method according to claim 24 or 25, **characterised in that** the device-specific identifier (IM 1, 2) is allocated to the telecommunication interfaces of spatially adjacent local units in successive periods of time.

27. Method according to one of claims 24 to 26, **characterised in that** several device-specific identifiers (IM 1, 2) are allocated to telecommunication interfaces (43, 53) of different local units (4, 5) in parallel or separate in time at different times in each case.

28. Method according to one of claims 24 to 27, **characterised in that** a server (2) which assigns the device-specific identifiers (IM 1,2) to the local units (4, 5) is allocated to several local units (4, 5).

29. Method according to claim 28, **characterised in that** the local units (4, 5) have in each case a router (42, 52) which assigns the device-specific identifier (IM 1, 2) assigned by the server (2) to a telecommunication interface (43) of the local unit (4, 5).

30. Method according to claim 28 or 29, **characterised in that** the server (2) takes the device-specific identifiers (IM 1, 2) from an identifier memory (25), preferably an internal identifier memory (25) of the server (2) and assigns each device-specific identifier (IM 1, 2) in each case to no or precisely one local unit (4, 5).

31. Method according to one of claims 20 to 30, **characterised in that** the calling interconnection point (44) and/or the called interconnection point (54) is a terminal device (44, 54) and/or a connection device for creating a connection to at least one terminal device or a further connection device.

## Revendications

1. Serveur pour un système de télécommunication, qui présente au moins :
une mémoire de cartes smart (21) destinée à recevoir plusieurs cartes smart (211), une interface de communication (23) pour un réseau de données (6),
un équipement fonctionnel de cartes smart (22) pour exécuter des commandes sur des cartes smart (211) en fonction d'un signal de commutation (S2) et
un dispositif de commande (24), qui reçoit, via l'interface de communication (23), un signal de composition (S1) d'un routeur (42) appelant ou appelé d'une unité locale (4) et un signal de données de connexion (S3) d'une mémoire de données (3) et qui envoie le signal de commutation (S2) à l'équipement de cartes smart (22) pour exécuter au moins une fonction sur au moins une carte smart (211), ainsi qu'un signal de connexion (S4) à l'interface de communication (23) pour envoyer un signal de données de carte smart (S6) à l'unité locale (4) servant à l'émulation d'une carte smart,
le dispositif de commande (24) détectant une connexion de télécommunication entre des interfaces de télécommunication (43-1, 53-2, 63) du routeur (42) appelant et/ou d'un routeur appelé (52) et/ou d'une interface externe (63) et établissant une connexion de télécommunication entre deux interfaces de télécommunication (43-1, 53-2, 63).

2. Serveur suivant la revendication 1, **caractérisé en ce que** le dispositif de commande (24) détecte la connexion de télécommunication, p.ex. GSM, GPRS ou UMTS suivant un algorithme d'estimation mémorisé.

3. Serveur suivant la revendication 1 ou 2, **caractérisé en ce que** le dispositif de commande (24) relie, en outre, une seconde carte SIM (211-2) à un autre routeur (52), en particulier à un routeur appelé.

4. Serveur suivant une des revendications précédentes, **caractérisé en ce que** la mémoire de cartes smart (21) présente des adaptateurs de cartes smart (211) associés aux différentes cartes smart (211) pour le raccordement à l'équipement fonctionnel de cartes smart (22).

5. Serveur suivant une des revendications précédentes, **caractérisé en ce que** la mémoire de données (3) est disposée dans le serveur (2).

6. Serveur suivant une des revendications précédentes, **caractérisé en ce que** le réseau informatique est un réseau fixe (6).

7. Serveur suivant une des revendications précédentes, **caractérisé en ce que** le dispositif de commande (24) relie une première carte SIM (211-1) à un dispositif d'émulation (41) via le signal de commutation (S2) et le signal de connexion (S4) et **en ce que** le dispositif d'émulation (41) émule localement la carte smart (211-1) à l'aide des signaux de données de carte smart (S6) reçues.

8. Serveur suivant une des revendications précédentes, **caractérisé en ce que** le dispositif de commande (24) présente:
un dispositif d'évaluation (242), qui reçoit le signal de composition (S1) et le signal de données de connexion (S3), qui détecte la connexion de télécommunication et qui émet un signal de commande (S5), et
un dispositif de commande de connexion (241) qui reçoit le signal de commutation (S5) et qui envoie le signal de commutation (S2), le signal de connexion à l'interface de communication (23) et, de préférence, également un signal de commande à la mémoire de cartes smart (21).

9. Serveur suivant une des revendications précédentes, **caractérisé en ce qu'**il présente une mémoire d'identification (25) avec plusieurs identifications spécifiques à l'appareil (IM 1,2) et **en ce que**
le dispositif de commande (24) reçoit de la mémoire d'identification (25) une identification spécifique à l'appareil et envoie à l'interface de communication (23) le signal de connexion (S4) pour l'émission d'un signal de données de carte smart (S6) et d'une identification spécifique à l'appareil (IM 1,2) à l'unité locale (4).

10. Serveur suivant les revendications 8 et 9, **caractérisé en ce que** le dispositif d'évaluation fixe l'affectation des identifications spécifiques à l'appareil (IM 1,2) aux unités locales (4,5).

11. Serveur suivant une des revendications précédentes, **caractérisé en ce que** le signal de données de connexion (S3) contient des informations d'estimation, par exemple des informations tarifaires, relatives à différentes connexions de télécommunication et **en ce que** le dispositif de tarification (242) détermine, en fonction du signal de composition (S1) une connexion de télécommunication entre deux interfaces GSM (43, 53, 63) avec une valeur optimisée.

12. Système de télécommunication servant en particulier à établir une connexion GSM qui présente au moins :
un serveur (2) suivant une des revendications précédentes,
une mémoire de données (3) servant à envoyer un signal de données (S3) au dispositif de commande (24) et
au moins une unité locale (4) qui présente un routeur (42) relié à l'interface de communication (23) via le réseau de données (6), un dispositif d'émulation (41) servant à émuler une carte smart (211) et au moins une interface terminale (43),
le dispositif de commande (24) du serveur (2) recevant un signal de demande (S1) du routeur (42) et un signal de données (S3) de la mémoire de données (3) et envoyant un signal de commutation (S2) à l'équipement fonctionnel de cartes smart (22) et un signal de commande à l'interface de communication (23) de manière qu'une carte smart (211-1) de la mémoire de cartes smart (21) soit reliée au dispositif d'émulation (41) servant à l'émulation de la carte smart pour l'interface terminale (43-1).

13. Système de télécommunication suivant la revendication 12, **caractérisé en ce que** plusieurs unités locales (4, 5) sont associées à un serveur central (2).

14. Système de télécommunication suivant la revendication 12 ou 13, **caractérisé en ce que** l'unité locale ou les unités locales (4, 5) présentent respectivement plusieurs interfaces terminales (43, 53).

15. Système de télécommunication suivant une des revendications 12 à 14, **caractérisé en ce que** chaque unité locale (4, 5) présente un dispositif d'émulation (41, 51) servant à la réception des signaux de la carte smart (S6) et à l'émulation de la carte smart (211) pour les interfaces terminales (43, 53).

16. Système de télécommunication suivant une des revendications 12 à 15, **caractérisé en ce qu'**au moins deux unités locales (4, 5) reliées à l'interface (23) via un réseau de données (6) sont prévues, unités locales, qui présentent respectivement un routeur (42, 52) relié à l'interface de communication (23) via le réseau de données (6), au moins un dispositif d'émulation (41, 51) pour la réception de signaux de données de carte smart (S6) et pour l'émulation d'une carte smart (211), au moins un point de transfert, par exemple un terminal d'utilisateur (44, 54) ou un dispositif de connexion et au moins une interface de télécommunication (53, 43) pour la connexion à une interface de télécommunication (53, 43) de l'autre unité locale (5, 4) ou d'une unité externe (63),
**en ce qu'**un signal de composition (S1) peut être envoyé via le routeur, le réseau de données (6) et l'interface de communication au dispositif de commande (24) à partir d'un point de transfert appelant (44-1) par l'intermédiaire de la première unité locale (4), pour établir une connexion de télécommunication avec un point de transfert appelé (54-2) par l'intermédiaire de la seconde unité locale (5), et
**en ce qu'**une connexion de télécommunication entre une interface de télécommunication appelant (43-1) et une interface de télécommunication interne ou externe appelée (53-2, 63) peut être détectée en fonction du signal de composition (S1) et **en ce que** des signaux de commutation (S2) peuvent être envoyés à l'équipement fonctionnel de cartes smart (22) et des signaux de commande de connexion (S4) peuvent être envoyés à l'interface de communication (23), de manière à ce qu'une émulation d'une carte smart (211) soit réalisée pour les interfaces de télécommunication respectives (43-1, 53-2).

17. Système de télécommunication suivant la revendication 16, **caractérisé en ce que** les unités locales (4, 5) présentent respectivement plusieurs points de transfert (44, 54), p. ex. des terminaux (44, 54) et/ou des dispositifs de connexion.

18. Système de télécommunication suivant la revendication 16 ou 17, **caractérisé en ce que** le signal de données de connexion (S3) contient des informations d'estimation, par exemple des informations tarifaires relatives à différentes connexions de télécommunication et **en ce que** le dispositif d'estimation (242) détermine en fonction du signal de composition (S1) une connexion de télécommunication entre deux interfaces de télécommunication (43, 53, 63) avec une valeur d'estimation, en particulier une valeur tarifaire, optimale.

19. Système de télécommunication suivant une des revendications 12 à 18, **caractérisé en ce qu'**il présente plusieurs serveurs (2), de préférence plusieurs serveurs (2) équivalents, qui présentent respectivement une mémoire de cartes smart (21).

20. Procédé pour établir une connexion de télécommunication, en particulier une connexion de téléphonie mobile, suivant lequel un signal de composition (S1) est envoyé par un point de transfert appelant (44) d'une première unité locale (4) à un premier routeur (42) de la première unité locale (4) et par le premier routeur (42) à un serveur (2) via un réseau de données (6),
le serveur (2) déterminant sur la base du signal de composition (S1) et d'un signal de données de connexion (S3) d'une mémoire de données, une connexion de télécommunication entre une première interface de télécommunication de la première unité locale (4) et une seconde interface de télécommunication d'une seconde unité locale (5) d'un point de transfert (54) appelé,
le serveur établissant une connexion entre une carte SIM (211) de sa mémoire de cartes SIM (21) et la première interface de télécommunication (43), ainsi qu'une connexion entre une carte SIM (211) et la seconde interface de télécommunication (53),
connexions, via lesquelles des signaux de données de carte smart sont transmis à la première unité locale et à la seconde unité locale,
les données de carte smart étant utilisées par les unités locales pour l'émulation des cartes SIM, et
une connexion de télécommunication étant établie entre le point de transfert appelant (44) et le second point de transfert appelé (54) via le premier routeur (42), la première interface de télécommunication (43), la seconde interface de télécommunication (53) et le second routeur.

21. Procédé suivant la revendication 20, **caractérisé en ce qu'**un dispositif de commande (24) du serveur (2) reçoit le signal de composition (S1) et le signal de données de connexion (S3), détecte une connexion de télécommunication, de préférence suivant une routine d'optimisation, et envoie un signal de commutation (S2) à un équipement fonctionnel de cartes smart (22) et un signal de connexion (S5) à une interface de communication (23) du serveur (2), de manière à établir une connexion entre une carte smart (211) et une interface de télécommunication (43) de la première unité locale et une connexion entre une carte smart (211) et une interface de télécommunication (43) de la seconde unité locale (5).

22. Procédé suivant la revendication 20 ou 21, **caractérisé en ce que** les connexions entre les cartes SIM (211) et les deux interfaces de télécommunication (43, 53, 63) permettent de préférence d'établir parallèlement d'autres connexions entre des cartes SIM (211) et d'autres interfaces de télécommunication (43, 53).

23. Procédé suivant une des revendications 20 à 22, **caractérisé en ce que** le signal de données de connexion (S3) contient un signal tarifaire relatif à différentes connexions de télécommunication et **en ce que** le dispositif de commande (24) détecte une connexion de télécommunication d'une valeur d'estimation optimale, p.ex. une valeur tarifaire, et que les cartes SIM sont reliées aux interfaces de télécommunication en raison de cette détection de connexion de télécommunication.

24. Procédé suivant une des revendications 22 à 23, **caractérisé en ce qu'**une identification spécifique à l'appareil (IM 1,2) est associée à des moments différents à des interfaces de télécommunication (43, 53) de différentes unités locales (4, 5).

25. Procédé suivant la revendication 24, **caractérisé en ce que** l'identification spécifique à l'appareil (IM 1,2) est associée aux interfaces de télécommunication en fonction de l'heure.

26. Procédé suivant la revendication 24 ou 25, **caractérisé en ce que** l'identification spécifique à l'appareil (IM 1,2) est associée par périodes successives aux interfaces de télécommunication d'unités locales voisines dans l'espace.

27. Procédé suivant une des revendications 24 à 26, **caractérisé en ce que** plusieurs identifications spécifiques à l'appareil (IM 1,2) sont associées parallèlement ou séparément dans le temps, respectivement à différents moments, à des interfaces de télécommunication (43, 53) d'unités locales différentes (4, 5).

28. Procédé suivant une des revendications 24 à 27, **caractérisé en ce qu'**un serveur (2), qui affecte les identifications spécifiques à l'appareil (IM 1, 2) aux unités locales (4, 5), est associé à plusieurs unités locales (4, 5).

29. Procédé suivant la revendication 28, **caractérisé en ce que** les unités locales (4, 5) présentent respectivement un routeur (42, 52) qui affecte l'identification spécifique à l'appareil (IM 1, 2) affectée par le serveur (2) à une interface de télécommunication (43) de l'unité locale (4, 5).

30. Procédé suivant la revendication 28 ou 29, **caractérisé en ce que** le serveur (2) prélève les identifications spécifiques à l'appareil (IM1,2) d'une mémoire d'identifications (25), de préférence d'une mémoire d'identifications interne (25) du serveur (2) et affecte chaque identification spécifique à l'appareil (IM 1,2) respectivement à aucune ou à une unité locale précise (4, 5).

31. Procédé suivant une des revendications 20 à 30, **caractérisé en ce que** le point de transfert appelant (44) et/ou le point de transfert appelé (54) est un terminal (44, 54) et/ou un dispositif de connexion servant à l'établissement d'une connexion avec au moins un terminal ou un autre dispositif de connexion.
